# EUROPEAN PATENT APPLICATION

(11) **EP 2 763 020 A1**
(43) Date of publication of application: **06.08.2014**
(21) Application number: 13153557.7
(22) Date of filing: 31.01.2013
(51) Int. Cl.: G06F 3/0488

(54) **Dynamic stylus palette**

(71) Applicant: BlackBerry Limited, Waterloo, ON N2K 0A7 (CA)
(72) Inventor: Kreek, Conrad A., Waterloo, Ontario N2L 3W8 (CA); Klassen, Gerhard Dietrich, Waterloo, Ontario N2L 3W8 (CA)
(74) Representative: Greenaway, Martin William

(57) **Abstract**

The present disclosure provides a method and apparatus for changing a property of a stylus (102) input to host electronic device (110). In response to a trigger event, a stylus palette (200) is displayed on the screen (108) of device (110) in proximity to a stylus location. The location and orientation of the stylus palette (200) may also depend on a user's palm position (602) or the orientation (802) of the device. This enables a property of the stylus (102) to be selected in response to stylus interaction with the stylus palette (200). Very little stylus movement is required to make the selection due to the proximity of the palette. The trigger event may be, for example, a press of a button (118) of the stylus, detection of a stylus position within a range of heights above the screen (108) of the host electronic device (110), or detection of a stylus motion gesture such as a shake, tap, or twist.

## Description

### BACKGROUND

A stylus pointing device provides position input to an application executing on a host electronic device. The position input may be used to interact with a graphical user interface displayed on a screen of the host electronic device, for example, or to provide graphical input for electronic drawing or writing.

In an electronic drawing application, stylus input may be associated with a drawing instrument, such as a pen or brush. The properties of the drawing instrument, such as the line color or thickness, are selected by user interaction with a menu that is usually located at an edge of the screen. A disadvantage of this approach is that, in order to change the properties of the drawing instrument, a user must move the stylus from a current drawing position to the edge of the screen, interact with the menu, and then move the stylus back to the drawing position. In particular, this movement requires repositioning of the user's wrist or palm position. A further disadvantage of this approach is that the menu obscures a portion of the screen, limiting the available drawing area.

It would be useful to easily and effectively change the properties of a stylus without the need to move to a pre-positioned menu.

### BRIEF DESCRIPTION OF THE DRAWINGS

Exemplary embodiments of the present disclosure will be described below with reference to the included drawings such that like reference numerals refer to like elements and in which:

**FIG's 1-3** are diagrams of an electronic drawing system, in accordance with exemplary embodiments of the present disclosure;

**FIG. 4** is a block diagram of a system for electronic drawing utilizing a dynamic stylus palette, in accordance with exemplary embodiments of the present disclosure;

**FIG. 5** is a flow chart of a method for electronic drawing utilizing a dynamic stylus palette, in accordance with exemplary embodiments of the present disclosure;

**FIG. 6** is a diagram of an electronic drawing system utilizing a dynamic stylus palette, in accordance with exemplary embodiments of the present disclosure;

**FIG. 7** is a diagram that illustrates dynamic stylus palette triggering, in accordance with exemplary embodiments of the present disclosure.

**FIG. 8** is a diagram of an electronic drawing system that utilizes a dynamic stylus palette, in accordance with exemplary embodiments of the present disclosure; and

**FIG. 9** is a flow chart of a method for determining an orientation of a dynamic stylus palette, in accordance with exemplary embodiments of the present disclosure.

### DETAILED DESCRIPTION

For simplicity and clarity of illustration, reference numerals may be repeated among the figures to indicate corresponding or analogous elements. Numerous details are set forth to provide an understanding of the illustrative embodiments described herein. The embodiments may be practiced without these details. In other instances, well-known methods, procedures, and components have not been described in detail to avoid obscuring the disclosed embodiments. The description is not to be considered as limited to the scope of the embodiments shown and described herein.

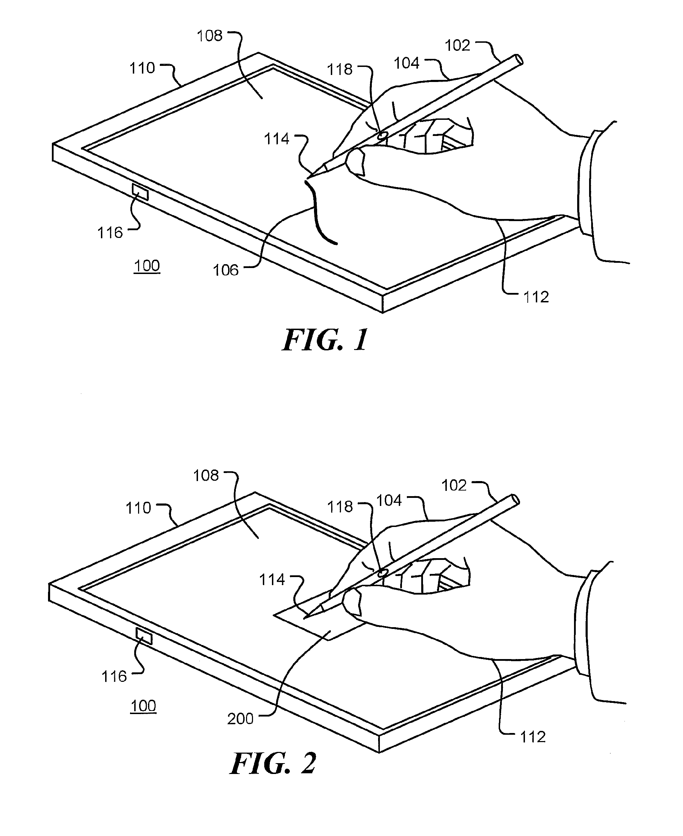

**FIG 1** is a diagram of an electronic drawing system 100, in accordance with exemplary embodiments of the present disclosure. In **FIG. 1**, the system 100 is operated in a drawing mode, in which a stylus pointing device 102 is moved by a user 104 to draw a line 106 on the display screen 108 of an electronic device 110. The electronic device 110 may be a handheld device such as a smart-phone, personal digital assistant or tablet computer, a mobile device such as a laptop computer, or other electronic device, such as a drawing tablet, electronic white board, desktop computer, large flat-screen display, or the like. The stylus 102 provides location input to the electronic device. The location input is used by an application executed on the electronic device 110 or on another device that is operatively coupled to the electronic device 110. The application may be, for example, an electronic drawing application, a handwriting recognition application, or any other application that utilizes stylus input. Further examples may include Web browsing, reading, gaming, photo editing, etc.

When controlling the stylus 102, the user 104 may rest their palm or wrist 112 on a region of the screen 108, or on a nearby surface. This action stabilizes the wrist of the user 104 and allows for finer control of the tip 114 of the stylus when drawing, because the stylus motion is controlled primarily by finger motion and wrist rotation.

In one exemplary embodiment of the present disclosure, the electronic device is provided with a button 116 to supply additional input to the electronic device 110.

In a further embodiment of the present disclosure, the stylus 102 is provided with a button 118 to supply additional input to the stylus. This input may be communicated to the electronic device 110 via a wired or wireless connection.

When using a stylus 102 to provide input to an electronic drawing application on the host electronic device 110, it may be desirable to change the properties of the virtual drawing instrument controlled by the stylus 102. Properties include, for example, instrument type, line style, and function. For example, it may be desired switch between drawing instrument types (e.g. pen, brush, chalk, etc.) or associated drawing instrument line styles, such as line color, thickness, hue, saturation, brightness, for example. In addition, line functions, such as highlighting, selecting (text or images lasso', etc), erasing, etc., may be selected. Some of these types, styles and functions are more common than others.

An illustrative aspect of the present disclosure relates to a quick and efficient method of selecting properties of stylus-controlled virtual drawing instrument and a way to customize this selection mechanism so that some operations can be more efficient. The known approach of keeping a visible or 'pop-up' menu at a fixed location both requires the user to move their hand to and from the menu. A menu at a fixed location, such as the edge of the screen 108 or at a pre-selected position, obscures a region of the screen. This fixed location menu is a particular disadvantage on the small screens of handheld electronic devices, such as smart-phones or tablet computers. Stylus movements to and from a menu and the time taken to complete the movements may have a significant impact on the productivity and effectiveness of the user. Additionally, the movements make it more difficult for property switching to be absorbed into muscle memory and become a fluid part of stylus use.

An example aspect of the present disclosure relates to a method for quickly and efficiently switching properties of virtual drawing instrument without a user needing to move their hand away from a current drawing or interaction location, and without obscuring any of the screen or work area. The method maximizes efficiency and speed of stylus configuration without compromising screen or work area content. The method utilizes a dynamic location for a stylus palette. There are several challenges to this approach. Firstly, determining where the palette should be displayed and, secondly, what orientation the palette should have. It is desirable, for example, that the palette be displayed close to the stylus X-Y hover position but not underneath the hand location. In addition, a handheld device, such as a tablet computer, may be used in various orientations when drawing a picture or diagram. The orientation may be restricted to 90° increments or finer increments (e.g. 1° increments). Vertical and/or horizontal orientation may be considered when determining the orientation of the palette.

In an exemplary embodiment, the location of an automatically positioned palette is determined based on both the stylus X-Y hover location and the location of a user's palm resting on the display. For example, the stylus XY hover location may be used as an anchor and the palette positioned opposite from the direction where the palm is resting. The orientation of the automatically positioned palette may be based on the last known rest position of the user's palm in relation to the stylus X-Y hover location at that time.

In an illustrative embodiment, the location of the palette may be adjusted based upon the location of the stylus. Small stylus motions are used to make selections from the palette, but larger stylus motions may take the stylus outside of the palette area. The palette location may be adjusted in response to larger stylus motions. The orientation of the palette may remain fixed as its location is adjusted. In an alternative embodiment, the palette location is only dependent upon the initial stylus location (together with the device orientation and the palm rest position).

**FIG 2** is a diagram of an electronic drawing system 100, in accordance with exemplary embodiments of the present disclosure. In **FIG. 2****,** the system 100 is operated in a selection mode, in which a stylus pointing device 102 is used to select from a dynamic palette 200 of selectable drawing instrument properties. The dynamic palette 200, which will be referred to a stylus palette in the sequel, is normally hidden and does not cover any of the content displayed on the screen. Referring to **FIG. 2****,** display of a stylus palette 200 is triggered, for example, when the stylus 102 is located a short distance from the screen 108, that is, when the tip 114 of the stylus 'hovers' over the screen 108, when a button 116 on the electronic device is pressed, or when a button 118 on the stylus 102 is pressed, or in response to a stylus gesture (such as a shake or twist). When triggered, the stylus palette 200 is displayed on the screen 108 at a location close to the location of the stylus. This enables the user 104 to select a stylus palette item without having to move their wrist. For example, it is common to rest a palm or wrist 112 on the screen or a nearby surface while drawing. Selection from the stylus palette 200 may be made without the user 104 having to change the position of their palm or wrist 112.

The location of the stylus palette 200 may be selected so that it is not hidden under the user's hand. The location is determined by detecting the location and orientation of the user's hand and/or wrist, or by knowledge of the user's handedness. The handedness may be detected or may be input as a user setting. The stylus palette 200 may be displayed on the screen 108 close to or partially under the user's fingers and possibly extending outside of finger area in the direction away from user wrist/hand.

In the example discussed above, the palette is used to display selectable drawing tool properties. However, the palette may display other stylus properties. For example, a stylus could be used for highlighting text, selecting content in various ways, navigation, changing content format or presentation, issuing actions (such as printing or changing application options), switching between palette types etc. Other uses of a dynamic stylus palette may occur to those in the art.

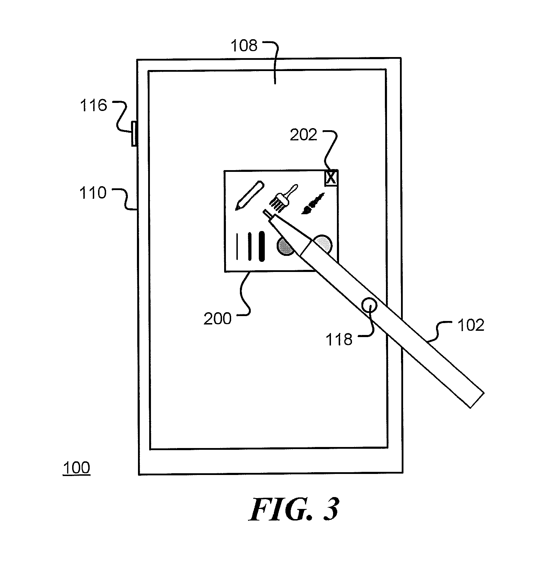

**FIG 3** is a diagram of an electronic drawing system 100, in accordance with exemplary embodiments of the present disclosure. In **FIG. 3****,** the system 100 is operated in a selection mode, in which a stylus palette 200 is displayed on the screen 108 of the electronic device 110. In one exemplary embodiment, the selection mode is entered when the user clicks a button 118 on the stylus or button 116 on the electronic device. In a further embodiment the selection mode is entered when the tip 114 of the stylus 108 is hovered in a specific range of heights above the screen 108. For example, stylus motion very close to the screen may be a part of normal drawing, while a stylus position far from the screen might indicate an end to drawing. Intermediate stylus positions would trigger display of the stylus palette. The trigger range may be selected by the user. The stylus location with respect to the surface of the screen 108 may be sensed by any of the various techniques known to those of ordinary skill in the art. This use of a hover trigger is different from the use of hover to trigger a display of context sensitive help, since the context sensitive help is displayed a fixed screen location that determined by the location of an icon associated a control element of a user interface. In a still further embodiment, entry to the selection mode and display of the stylus palette 200 is triggered by a stylus gesture such as a small vertical shake sensed, for example, by an accelerometer in the stylus 102 or a rotation sensed by a gyroscope in the stylus 102. Similarly, on or more taps of the stylus on the screen may be used to trigger the selection mode.

Once the stylus palette 200 is displayed in proximity to the current stylus position, very little stylus movement is required to select a new drawing instrument property.

The stylus palette 200 may be configured by the user to have commonly used properties immediately visible. In **FIG. 3****,** for example, the stylus palette 200 enables selection between different drawing-instrument types, different line thicknesses and different colors. Via a menu item on the stylus palette, or via another user interface control, the user may select which properties are displayed on the stylus palette 200.

Commonly used selections may be automatically added to a region of the stylus palette 200. This may be done by monitoring the behavior of the user with regard to property selections. For example, a black pen is used often, the type 'pen' and color 'black' are added to the stylus palette 200. A specified region of the stylus palette may be reserved for automatically added selectable properties.

The size of the stylus palette 200, the number of selectable properties, and arrangement of the selectable properties may be adjusted by the user.

In an illustrative embodiment, a user may save and restore a number of different stylus palette configurations, enabling different stylus palettes to be used in different applications or documents.

The stylus palette 200 may comprise a collection of symbols, such as icons, pictures and/or color swipes. An example is shown in **FIG. 3****.** Associated text, such as labels, may also be included.

The electronic device 110 may be returned to a drawing mode of operating when the button 116 or button 118 is pressed again, when a selection has been made, when a virtual button, such as 202, displayed on the stylus palette 200 is pressed or when a specified stylus gesture is made.

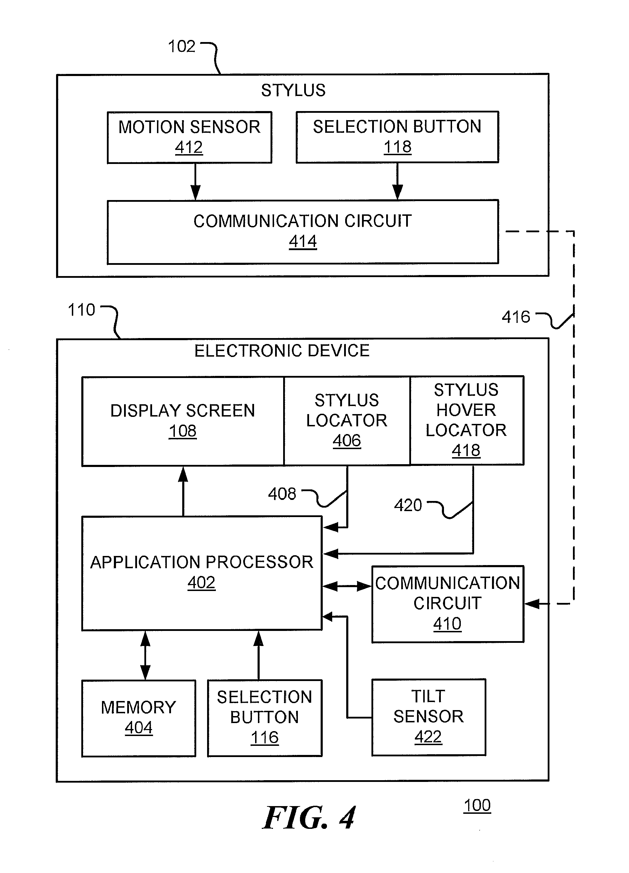

**FIG. 4** is a block diagram of a system 100 for electronic drawing utilizing a dynamic stylus palette. The system 100 includes a stylus 102 and a host electronic device 110. The host electronic device 110 has a display screen 108 that is driven an application processor 402. The application processor 402 executes an electronic drawing application, in which images are displayed on the screen 108 in response to movement of the stylus 102. The electronic drawing application, together with components of an operating system, may be stored in a memory 404, coupled to the application processor 402. The application processor 402 is responsive to a stylus locator 406 that provides a stylus location input 408. The stylus locator 406 may locate the stylus in three dimensions, that is, two dimensions in the plane of the screen and third dimension corresponding to the height of the stylus above the screen 108. Alternatively, the stylus locator 406 may locate the stylus contact position on the screen and a stylus hover locator 418 may be used to determine the stylus hover position and provide a stylus hover input 420. The application processor 402 may also be responsive to a selection button 116, discussed above, and a communication circuit 410 that provides a communication link to the stylus 102.

The stylus 102 includes a selection button 118, discussed above, a motion sensor 412, such as an accelerometer or gyroscope, and a stylus communication circuit 414. The stylus communication circuit 414 is operable to provide a trigger signal 416 to a corresponding communication circuit 410 of the electronic device 110. The trigger signal 416 is responsive to the motion sensor 412 and/or the selection button 118 may be used to switch operation of the electronic device between a drawing mode, in which the stylus 102 is used to draw images on the screen 108, and a selection mode, in which the stylus 102 is used to interact with a stylus palette displayed on the screen 108.

The memory 404 may also be used to store and retrieve a number of different stylus palette configurations, to enable the user to select different palettes for different circumstances.

The electronic device may include a tilt sensor 422, such as a tri-axial accelerometer, which can be used to sense the orientation of the electronic device in relation to the vertical direction.

It will be appreciated that any module or component disclosed herein that executes instructions, such as application processor 402, may include or otherwise have access to non-transient and tangible computer readable media such as storage media, computer storage media, or data storage devices (removable or non-removable) such as, for example, magnetic disks, optical disks, or tape data storage. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the server, any component of or related to the network, backend, etc., or accessible or connectable thereto. Any application or module herein described may be implemented using computer readable/executable instructions that may be stored or otherwise held by such computer readable media.

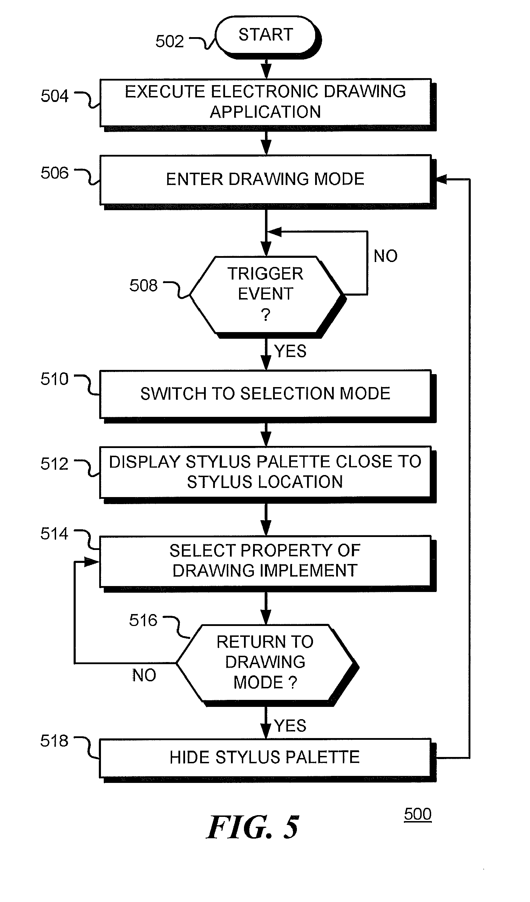

**FIG. 5** is a flow chart 500 of a method for electronic drawing utilizing a dynamic stylus palette. Following start block 502, an electronic drawing application is executed at block 504 on an electronic device. The drawing application enters a drawing mode at block 506. In the drawing mode, a stylus is used to control a virtual drawing instrument to draw on a screen of the electronic device. If a trigger event is detected, as depicted by the positive branch from decision block 508, the drawing application switches to a selection mode of operation at block 510. The trigger event may be, for example, a press of a button of the stylus, detection of a stylus position within a range of heights above the screen of the host electronic device, or detection of a stylus motion gesture (such as shake or tap of the stylus). If no trigger event is detected, as depicted by the negative branch from decision block 508, the drawing application remains in drawing mode. Once the selection mode is entered, a stylus palette is displayed, at block 512, on the screen close to the location of the stylus. The stylus palette is positioned such that a user may make selections from the stylus palette with little or no movement of user's wrist position. One or more selections are made at block 514. The selections are used to set properties of the virtual drawing instrument, such as instrument type, line color, line style, instrument function, etc. At decision block 516, a determination is made to see if the drawing application should return to the drawing mode or remain in the selection mode. Return to the drawing mode may be triggered, for example, by a button on the stylus, a button on the host electronic device, an icon or button on the displayed stylus palette or by a stylus gesture. Additionally, return to drawing mode may be triggered if the stylus moves outside of a selected hover range. If return to the drawing mode is indicated, as depicted by the positive branch from decision block 516, the stylus palette is removed from display at block 518 and flow returns block 506. Otherwise, as depicted by the negative branch from decision block 516, the drawing application remains in selection mode and flow returns to block 514 to receive further selections. In this way, the stylus palette is only displayed when needed and so does not obscure useful regions of the screen. Additionally, the stylus palette is displayed close to the current stylus location, requiring minimal movement of the user's hand and minimum interruption to the drawing process.

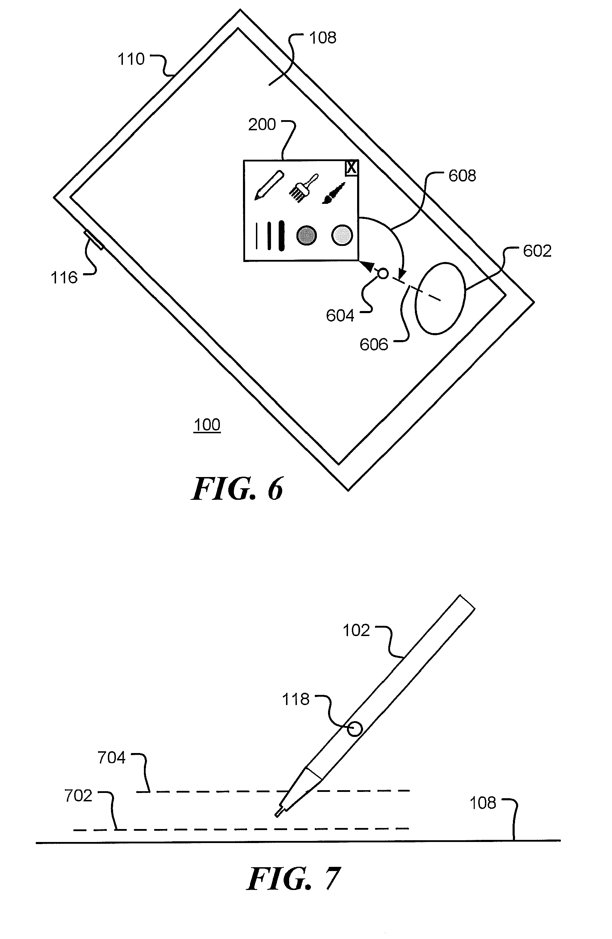

**FIG. 6** is a diagram of an electronic drawing system 100 utilizing a dynamic stylus palette, in accordance with exemplary embodiments of the present disclosure. **FIG. 6** illustrates a method for determining the location of a dynamic stylus palette 200 on the screen 108 of an electronic device 110. In operation, a user may rest their palm on a region 602 of the screen 108. This region may be detected when the screen 108 is a touch screen, for example. The current stylus location is indicated by circle 604. The relationship between the stylus palette 220, the stylus location 604 and the center of the palm rest region 602 is denoted by the arrow 606. The arrow 606 begins at the center of the palm rest region 602 and continues through and beyond the stylus location 604. In operation, a processor of the electronic device 110 determines the stylus palette position from inputs indicative of the palm rest region 602 and the stylus location 604. The arrow 606 indicates an exemplary scheme for determining the stylus palette location. Other schemes dependent or based upon the stylus location, the palm rest location, and/or the handedness of the user may occur to those of ordinary skill in the art. The result being a stylus palette that is dynamically located at a position convenient to the user.

In operation, the user's palm may not make contact with the screen 108 when the stylus palette is triggered (by detection of a specified hover height or activation of a button on the stylus, for example). In this case, a prior palm position may be used. In an exemplary embodiment, when palm contact is detected, the current palm position is saved to a memory. When stylus palette is triggered, the most recent palm position is retrieved from the memory and is used to determine the stylus palette location on the screen. Similarly, a prior stylus contact location may be used, rather than the hover location, to determine the location of the displayed stylus palette.

In an exemplary embodiment, the stylus palette 200 is displayed at a selected angle 608 relative to the direction 606. When writing or drawing, the direction 606 remains within a relative small range of orientations with respect to the user. Consequently, the direction 606, which may be determined from a sensed palm position and a sensed stylus location, provides a reference direction from which the orientation of the stylus palette 200 may be determined.

**FIG. 7** is a diagram illustrating dynamic stylus palette triggering, in accordance with exemplary embodiments of the present disclosure. **FIG. 7** shows a stylus 102 hovering over the screen 108 of an electronic device. The broken line 702 indicates a threshold height above the screen below which the stylus palette is not triggered. That is, if the stylus palette is hidden, it remains hidden while the tip of the stylus remains below the line 702. The broken line 704 indicates a threshold height above the screen above which the stylus palette is not triggered and above which the stylus palette is hidden. That is, when the tip of the stylus is above line 704, the stylus palette is hidden. When the tip of the stylus is between the lines 702 and 704, the stylus palette is displayed (unless otherwise hidden using button 118, for example). In operation, the height of the stylus tip above the screen 108 is sensed, and the stylus palette is displayed or hidden dependent upon the height of the stylus tip. Account may be taken of the time above or below a height threshold, so that any action is delayed until the stylus has been in the same height range for a period of time. This may be achieved, for example, by applying a low pass filter to the height signal or by resetting a timer when a height threshold is crossed.

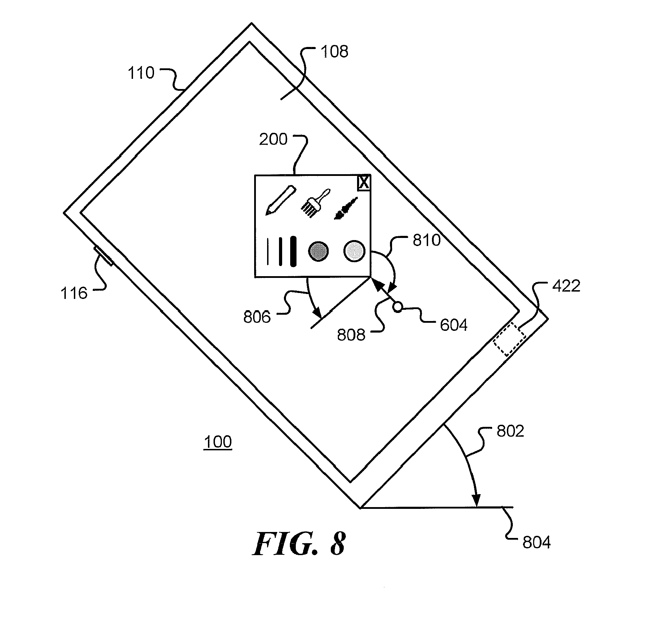

**FIG. 8** is a diagram of an electronic drawing system 100 utilizing a dynamic stylus palette, in accordance with exemplary embodiments of the present disclosure. **FIG. 8** illustrates a method for determining the orientation of a dynamic stylus palette 200 on the screen 108 of an electronic device 110. In operation, a user may tilt the electronic device 110 at an angle 802 to the horizontal 804. This may occur, for example, when the electronic device is handheld and used for drawing or writing. For example, a user may adjust the orientation of the screen 108 to facilitate drawing on the screen. When a trigger event occurs, the orientation 802 of the screen 108 is sensed by a tilt sensor 422 and that orientation is used to determine the orientation 806of the stylus palette 200 relative to an edge of the screen 108. Note that, in this example, the stylus palette 200 is rotated in the opposite direction the electronic device 110 so as to maintain the orientation of the stylus palette with respect to a user. The direction of the vector 808 (which is not displayed on the screen) is selected to be at angle 810 to the stylus palette 200 and may be used to determine the location of the stylus palette 200 relative to the stylus location 604. In **FIG. 8****,** the user is assumed to be right handed, and the bottom right corner of the stylus is positioned at a location displaced by the vector 808 from the stylus location 604. In a similar manner, the stylus palette 200 is displayed to the right of the stylus location 604 if the user is assumed to be left handed. Handedness may be determined, for example, by user selection or by monitoring palm and stylus locations during earlier operation.

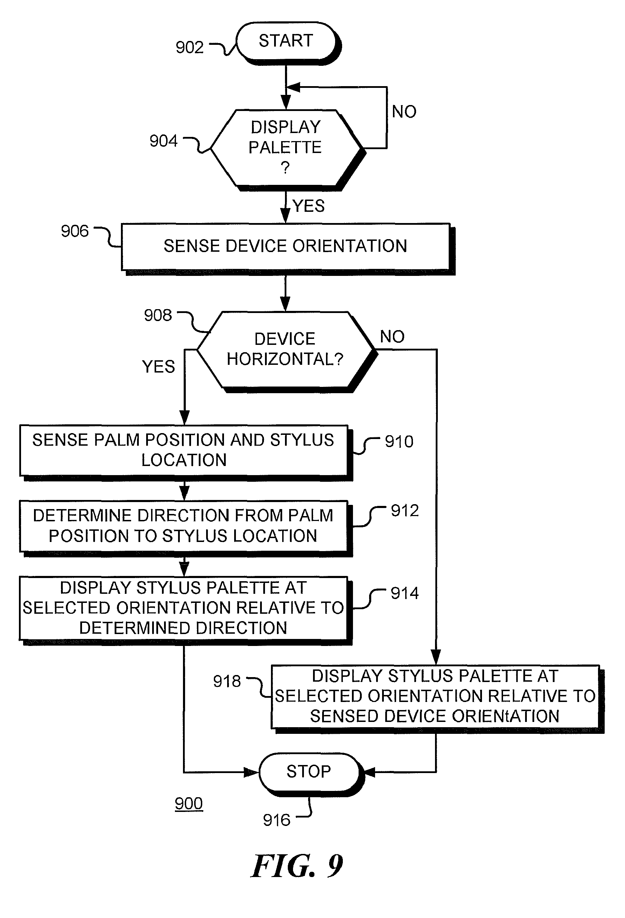

**FIG. 9** is a flow chart 900 of a method for determining an orientation of a dynamic stylus palette, in accordance with exemplary embodiments of the present disclosure. Following start block 902, it is determined at decision block 904 if a dynamic stylus palette is to be displayed. If a dynamic stylus palette is to be displayed, as depicted by the positive branch from decision block 904, the orientation or tilt of the electronic device is sensed at block 906. A tri-axial accelerometer, for example, may be used to sense the tilt. At decision block 908 it is determined if the orientation of the electronic device is substantially horizontal. If so, as depicted by the positive branch from decision block 908, the locations of the user's palm and the tip of the stylus are sensed at block 910. From these sensed locations, a direction from the palm position to the stylus position is determined at block 912. At block 914, the stylus palette is displayed on the screen of the electronic device with a selected, or predetermined, orientation relative to the determined direction, as illustrated in **FIG. 6****,** for example. The method terminates at block 916. If the electronic device is not substantially horizontal, as depicted by the negative branch from decision block 908, the stylus palette is displayed on the screen of the electronic device with an orientation dependent or based upon the orientation, or tilt, or the electronic device at block 918. This is illustrated in **FIG. 8****,** for example. Again, the method terminates at block 916.

More than one stylus may be used at the same time on a screen. In one illustrative embodiment, each stylus has its own identifier that is used to associate the stylus to a corresponding palette or set of palettes. In this way, the electronic device will respond differently based upon which stylus is detected. In addition, a single user may use a number of different styli, each with its own properties.

A stylus may be used by multiple people. Once the user has been identified, the electronic device may respond with stylus palettes customized for that user.

The implementations of the present disclosure described above are intended to be merely exemplary. It will be appreciated by those of skill in the art that alterations, modifications and variations to the illustrative embodiments disclosed herein may be made without departing from the scope of the present disclosure. Moreover, selected features from one or more of the above-described embodiments may be combined to create alternative embodiments not explicitly shown and described herein.

The present disclosure may be embodied in other specific forms without departing from its spirit or essential characteristics. The described exemplary embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

What is claimed is:

## Claims

1. A method for changing a property of a stylus (102) in an application executed on a host electronic device (110), the method comprising:
in response to a trigger event:
displaying a stylus palette (200) on a screen (108) of the host electronic device (110) in proximity to a stylus location of the stylus (102); and
selecting a property of the stylus in response to interaction of the stylus (102) with the stylus palette (200).

2. The method of claim 1, further comprising:
removing the stylus palette (200) from display on the screen (108) in response to a further trigger event,
where the further trigger event comprises one of:
selection of a property of the stylus from the palette;
detection of a stylus location at a height above the screen of the electronic device greater than a threshold height (704); and
a press of a button (118) of the stylus (102).

3. The method of claim 1, where the trigger event comprises one of a press of a button (118) of the stylus (102);
detection of a stylus location within a range of heights (702,704) above the screen (108) of the host electronic device (110); and
detection of a stylus motion gesture.

4. The method of claim 1, where the stylus palette (200) comprises a collection of symbols denoting one or more properties including one or more of:
line width, line color, line style, line function and drawing instrument type.

5. The method of claim 1 where displaying the stylus palette (200) comprises displaying the stylus palette at a screen location and orientation dependent upon one or more of:
a current location (604) of the stylus;
a prior location of the stylus;
a user hand orientation (606); and
a user palm rest position (602),
such that the stylus palette is not obscured by a hand of the user.

6. The method of claim 1, further comprising:
in response to the trigger event:
selecting the stylus palette (200) from a plurality of stylus palettes dependent upon an identifier of the stylus or an identifier of a user of the stylus (102).

7. An electronic device (110) comprising:
a screen (108);
a processor (402) operable to execute an application responsive to an input (416) from at least one stylus (102) and configured to display a stylus palette (200) on the screen in response to a trigger event, the stylus palette (200) displayed in proximity to a sensed location of a stylus of the at least one stylus,
where the processor is further operable to select a property of the stylus in response to a user interaction with the displayed stylus palette.

8. The electronic device of claim 7, where the trigger event is selected from one or more trigger events comprising:
a press of a button (118) of the stylus (102),
a press of a button (116) of the electronic device (110),
detection of a stylus position within a range of heights (702,704) above the screen (108), and
detection of a stylus motion gesture.

9. The electronic device of claim 7, where the processor (402) is further responsive to one or more of:
a prior location of the stylus;
a user hand orientation (606); and
a user palm rest position (602),
such that the displayed stylus palette (200) is not obscured by a hand of the user.

10. The electronic device of claim 7, further comprising a stylus locator (406), operable to provide the sensed location of the stylus (102).

11. The electronic device of claim 7, further comprising:
a communication circuit (410) operable to receive a trigger signal (416)
from the stylus (102);
where the trigger event is generated in response to the trigger signal (416).

12. The electronic device of claim 11, further comprising:
a stylus (102) operable to provide the trigger signal (416).

13. The electronic device of claim 7, further comprising:
a memory (404) operable to store one or more stylus palette configurations.

14. The electronic device of claim 7, further comprising:
an orientation sensor (422) operable to sense an orientation of the screen (108),
where the processor (402) is further responsive to a sensed screen orientation and where the stylus palette (202) is displayed in proximity to a sensed location of a stylus and oriented dependent upon the sensed screen orientation.

15. The electronic device of claim 7, further comprising:
a stylus hover locator (418), operable to sense a height of the stylus (102) above the screen (108),
where the trigger event comprises detection of a sensed stylus height within a range of heights (702,704).

## Amended claims

### Amended claims in accordance with Rule 137(2) EPC.

**1.** A method for changing a property of a virtual drawing instrument controlled by a stylus (102) in an application executed on a host electronic device (110), the method comprising:
in response to a trigger event:
displaying a stylus palette (200) comprising selectable virtual drawing instrument properties on a screen (108) of the host electronic device (110) in proximity to a stylus location of the stylus (102); and
selecting a property of the virtual drawing instrument in response to interaction of the stylus (102) with the stylus palette (200).

**2.** The method of claim 1, further comprising:
removing the stylus palette (200) from display on the screen (108) in
response to a further trigger event,
where the further trigger event comprises one of:
selection of a property of the virtual drawing instrument from the palette;
detection of a stylus location at a height above the screen of the electronic device greater than a threshold height (704); and
a press of a button (118) of the stylus (102).

**3.** The method of claim 1, where the trigger event comprises one of
a press of a button (118) of the stylus (102);
detection of a stylus location within a range of heights (702,704) above the screen (108) of the host electronic device (110); and
detection of a stylus motion gesture.

**4.** The method of claim 1, where the stylus palette (200) comprises a collection of symbols denoting one or more properties including one or more of:
line width, line color, line style, line function and drawing instrument type.

**5.** The method of claim 1 where displaying the stylus palette (200) comprises displaying the stylus palette at a screen location and orientation dependent upon one or more of:
a current location (604) of the stylus;
a prior location of the stylus;
a user hand orientation (606); and
a user palm rest position (602),
such that the stylus palette is not obscured by a hand of the user.

**6.** The method of claim 1, further comprising:
in response to the trigger event:
selecting the stylus palette (200) from a plurality of stylus palettes dependent upon an identifier of the stylus or an identifier of a user of the stylus (102).

**7.** An electronic device (110) comprising:
a screen (108);
a processor (402) operable to execute an application responsive to an input (416) from at least one stylus (102) to control a virtual drawing instrument and configured to display a stylus palette (200) comprising selectable virtual drawing instrument properties on the screen in response to a trigger event, the stylus palette (200) displayed in proximity to a
sensed location of a stylus of the at least one stylus,
where the processor is further operable to select a property of the virtual drawing instrument in response to a user interaction with the displayed stylus palette.

**8.** The electronic device of claim 7, where the trigger event is selected from one or more trigger events comprising:
a press of a button (118) of the stylus (102),
a press of a button (116) of the electronic device (110),
detection of a stylus position within a range of heights (702,704) above the screen (108), and
detection of a stylus motion gesture.

**9.** The electronic device of claim 7, where the processor (402) is further responsive to one or more of:
a prior location of the stylus;
a user hand orientation (606); and
a user palm rest position (602),
such that the displayed stylus palette (200) is not obscured by a hand of the user.

**10.** The electronic device of claim 7, further comprising a stylus locator (406), operable to provide the sensed location of the stylus (102).

**11.** The electronic device of claim 7, further comprising:
a communication circuit (410) operable to receive a trigger signal (416) from the stylus (102);
where the trigger event is generated in response to the trigger signal (416).

**12.** The electronic device of claim 11, further comprising:
a stylus (102) operable to provide the trigger signal (416).

**13.** The electronic device of claim 7, further comprising:
a memory (404) operable to store one or more stylus palette configurations.

**14.** The electronic device of claim 7, further comprising:
an orientation sensor (422) operable to sense an orientation of the screen (108),
where the processor (402) is further responsive to a sensed screen orientation and where the stylus palette (202) is displayed in proximity to a sensed location of a stylus and oriented dependent upon the sensed screen orientation.

**15.** The electronic device of claim 7, further comprising:
a stylus hover locator (418), operable to sense a height of the stylus (102) above the screen (108),
where the trigger event comprises detection of a sensed stylus height within a range of heights (702,704).
